# EUROPÄISCHE PATENTANMELDUNG

(11) **EP 3 395 211 A1**
(43) Veröffentlichungstag der Anmeldung: **31.10.2018**
(21) Anmeldenummer: 18159454.0
(22) Anmeldetag: 01.03.2018
(51) Int. Cl.: A47J 31/44

(54) **GLASKANNE**

(30) Priorität: 25.04.2017 DE 202017102438 U
(71) Anmelder: Melitta Europa GmbH & Co. KG, 32427 Minden (DE)
(72) Erfinder: SACHTLEBEN, Andreas, 32427 Minden (DE)
(74) Vertreter: Dantz, Jan Henning

(57) **Zusammenfassung**

Die Erfindung betrifft eine Glaskanne (1), insbesondere für eine Kaffeemaschine, mit einem Glaskörper (2), einem an einer Öffnung (3) des Glaskörpers (2) vorgesehenen Deckel (4) und einem von dem Glaskörper (2) hervorstehenden Griff (6), wobei an dem Glaskörper (2) Dosiermarkierungen (10, 11) zur Anzeige einer in dem Glaskörper (2) enthaltenen Flüssigkeitsmenge vorgesehen sind, wobei die Dosiermarkierungen (10, 11) durch integral mit dem Glaskörper (2) ausgebildete Profilierungen ausgebildet sind.

## Beschreibung

Die vorliegende Erfindung betrifft eine Glaskanne, insbesondere für eine Kaffeemaschine, mit einem Glaskörper, einem an einer Öffnung des Glaskörpers vorgesehenen Deckel und einem von dem Glaskörper hervorstehenden Griff, wobei an dem Glaskörper Dosiermarkierungen zur Anzeige einer in dem Glaskörper enthaltenen Flüssigkeitsmenge vorgesehen sind.

Die EP 2 700 337 B1 offenbart eine Kaffeemaschine, bei der unter einem Filterhalter ein Behälter in Form einer Glaskanne vorgesehen ist, die aus dem Filterhalter strömenden gebrühten Kaffee auffängt. Solche Glaskannen haben sich insbesondere für Kaffeemaschinen bewährt, wobei sie einerseits zum Auffangen des zubereiteten Kaffees dienen und andererseits zum Füllen eines Wassertanks an der Kaffeemaschine. Die Glaskanne wird hierfür unter einen Wasserhahn gehalten und mit Wasser gefüllt, um die gewünschte Menge Kaffee zubereiten zu können. Hierbei ist es hilfreich, wenn die Glaskanne mit Dosiermarkierungen ausgestattet ist, die meist auf den Glaskörper oder einen Griff an der Glaskanne aufgedruckt sind. Das Aufdrucken von Dosiermarkierungen erfordert allerdings einen zusätzlichen Herstellungsschritt, und zudem ist die Dosiergenauigkeit begrenzt, da die Glaskanne beim Befüllvorgang leicht schräg gehalten werden kann.

Es ist daher Aufgabe der vorliegenden Erfindung, eine Glaskanne zu schaffen, die einfach herstellbar ist und eine optimierte Handhabung beim Befüllen gewährleistet.

Diese Aufgabe wird mit einer Glaskanne mit den Merkmalen des Anspruches 1 gelöst.

Die erfindungsgemäße Glaskanne umfasst einen Glaskörper, einen an einer Öffnung des Glaskörpers vorgesehenen Deckel, sowie einen Griff, wobei an dem Glaskörper integral ausgebildete Dosiermarkierungen in Form von Profilierungen ausgebildet sind. Dadurch entfällt der zusätzliche Schritt des Bedruckens der Dosiermarkierungen, da diese durch Profilierungen an dem Glaskörper vorgesehen werden. Die Dosiermarkierungen sind somit gut sichtbar und verbessern die Handhabung beim Befüllen der Glaskanne.

Vorzugsweise sind die Dosiermarkierungen ringförmig an dem Glaskörper in unterschiedlichen horizontalen Ebenen angeordnet. Die Dosiermarkierungen können optional auch halbkreisförmig ausgebildet sein und erstrecken sich vorzugsweise um mindestens 30 % des Umfanges, vorzugsweise um mehr als 60 %. Eine vollständig umlaufende ringförmige Form der Dosiermarkierungen hat den Vorteil, dass beim Befüllvorgang auch die Positionierung der Glaskanne mit einer möglichst horizontalen Ausrichtung des Bodens der Glaskanne gut sichtbar wird, da bei einer Schrägstellung die Oberfläche der Flüssigkeit winklig zu den horizontal angeordneten Dosiermarkierungen verläuft.

In einer vorteilhaften Ausgestaltung sind mindestens drei Dosiermarkierungen, vorzugsweise vier bis acht Dosiermarkierungen, vorgesehen. Dabei kann jede Dosiermarkierung einer Füllmenge einer oder zwei Tassen entsprechen, so dass der Benutzer auf einfache Weise die für die Kaffeezubereitung notwendige Füllmenge einfüllen kann.

Für eine optisch ansprechende Ausgestaltung ist der Glaskörper bis auf einen Ausgussbereich an der Öffnung rotationssymmetrisch ausgebildet. An dem Ausgussbereich kann eine hervorstehende Tülle vorgesehen sein, die das Ausgießen erleichtert. Wenn im Übrigen eine rotationssymmetrische Ausbildung des Glaskörpers vorhanden ist, kann das Volumen des Glaskörpers optimal an einer Kaffeemaschine genutzt werden, und zudem verbessert dies die Reinigung des Glaskörpers.

Für eine einfache Fixierung des Griffes an dem Glaskörper kann dieser über ein Spannband an dem Glaskörper festgelegt sein, das in einer Vertiefung des Glaskörpers umlaufend geführt ist.

Die integral mit dem Glaskörper ausgebildeten Profilierungen können als nach außen hervorstehende Rippen oder als rillenförmige Vertiefungen an der Außenseite des Glaskörpers ausgebildet sein. Die Rillen oder Rippen können eine Breite von 0,5 bis 3 mm, vorzugsweise 1 mm bis 2 mm, aufweisen, um einerseits gut sichtbar zu sein und zudem leicht gereinigt werden zu können. Optional können zusätzlich zu den Dosiermarkierungen an dem Griff oder dem Glaskörper Kennzeichnungen in Form von Ziffern oder Symbolen zur Anzeige der Füllmenge an der Glaskanne vorgesehen werden.

Die Erfindung wird nachfolgend anhand eines Ausführungsbeispiels mit Bezug auf die beigefügten Zeichnungen näher erläutert. Es zeigen:
- Figur 1: eine Seitenansicht einer erfindungsgemäßen Glaskanne;
- Figur 2: eine geschnittene Detailansicht der Glaskanne der Figur 1, und
- Figur 3: eine geschnittene Detailansicht einer modifizierten Glaskanne.

Eine Glaskanne 1 umfasst einen Glaskörper 2, an dessen Oberseite eine Öffnung 3 vorgesehen ist. Die Öffnung 3 ist zumindest teilweise durch einen Deckel 4 verschlossen, der abnehmbar an der Öffnung 3 gehalten ist, vorzugsweise über eine Gelenkverbindung, so dass er über Drücken eines Betätigungselementes verschwenkt werden kann. An der Öffnung 3 ist an einer Seite ein Ausgussbereich 5 oder eine Tülle vorgesehen, die auch bei geschlossenem Deckel 4 ein Ausgießen einer Flüssigkeit ermöglicht. Außerhalb dieses Ausgussbereiches 5 ist der Glaskörper 2 rotationssymmetrisch ausgebildet.

An dem Glaskörper 2 ist ferner ein hervorstehender Griff 6 fixiert, der einerseits an einer Oberseite des Glaskörpers 2 gehalten ist und andererseits über ein Spannband 7 fixiert ist, das oberhalb eines horizontalen Bodens 8 des Glaskörpers 2 umlaufend angeordnet ist. Der Begriff "horizontal" bezieht sich auf eine Abstellposition der Glaskanne 1, wenn diese auf einem ebenen horizontalen Untergrund abgestellt ist.

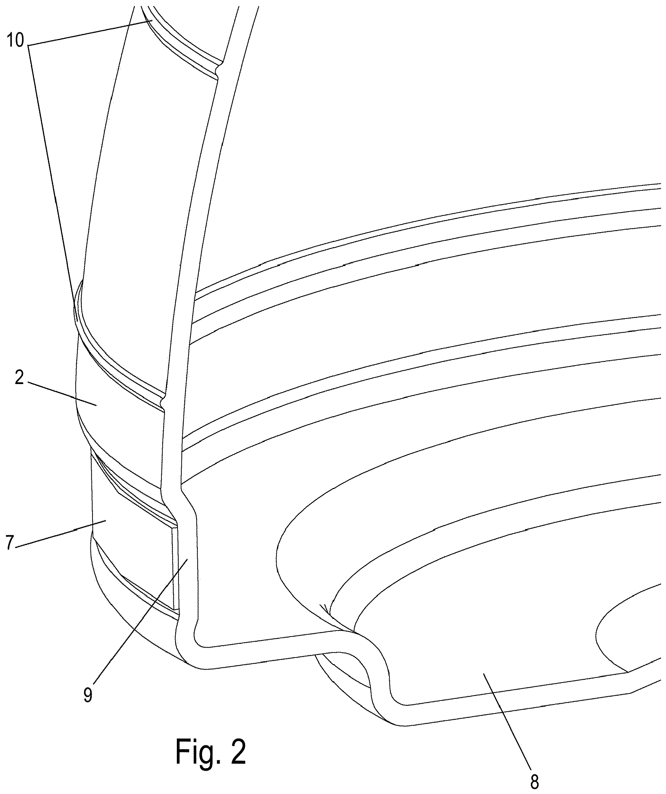

Wie in Figur 2 gezeigt ist, besitzt der Boden 8 eine stufenförmige Form und mündet in einer Wand, an der benachbart zu dem Boden 8 eine ringförmig umlaufende Vertiefung 9 ausgebildet ist, an der das Spannband 7 umlaufend geführt ist. Oberhalb des Spannbandes 7 sind an der Seitenwand des Glaskörpers 2 ringförmige Profilierungen in Form von Rippen 10 vorgesehen, die an der Außenseite des Glaskörpers 2 hervorstehen, beispielsweise um 0,2 mm bis 3 mm, insbesondere 0,5 mm bis 2 mm. Die Breite der Rippen 10 kann ebenfalls in einem Bereich zwischen 0,2 mm bis 3 mm, vorzugsweise 0,5 mm bis 2 mm, liegen. In jedem Fall sind die Rippen 10 von außen sichtbar und dienen als Dosiermarkierung, um dem Benutzer beim Befüllen der Glaskanne 1 die eingefüllte Flüssigkeitsmenge anzuzeigen. Durch den ringförmigen Verlauf der Rippen 10 wird für den Benutzer zudem sichtbar, ob der Boden 8 parallel zur Horizontalen ausgerichtet ist, so dass eine vergleichsweise genaue Befüllung der Glaskanne 1 ermöglicht wird.

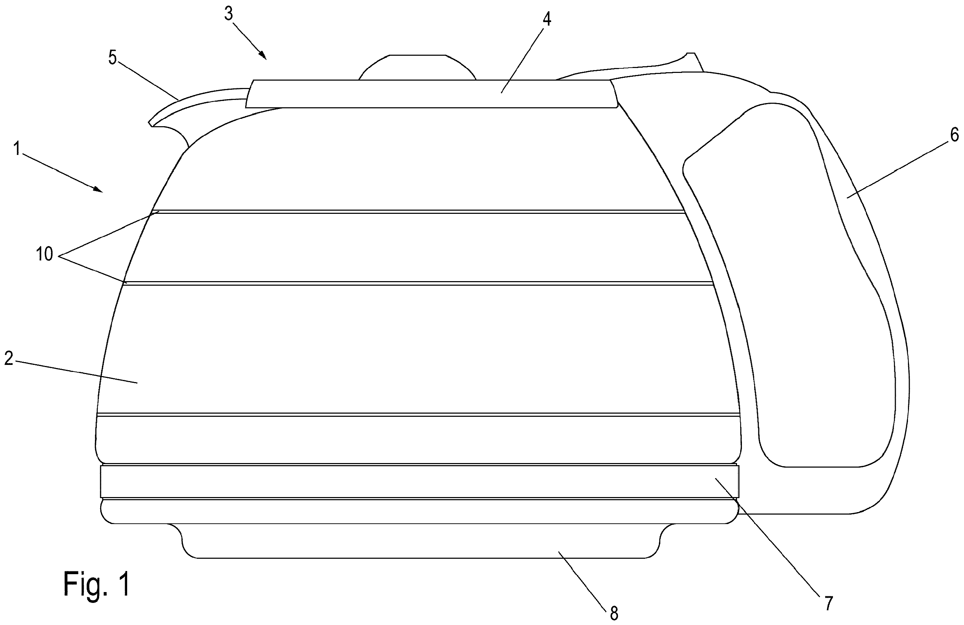

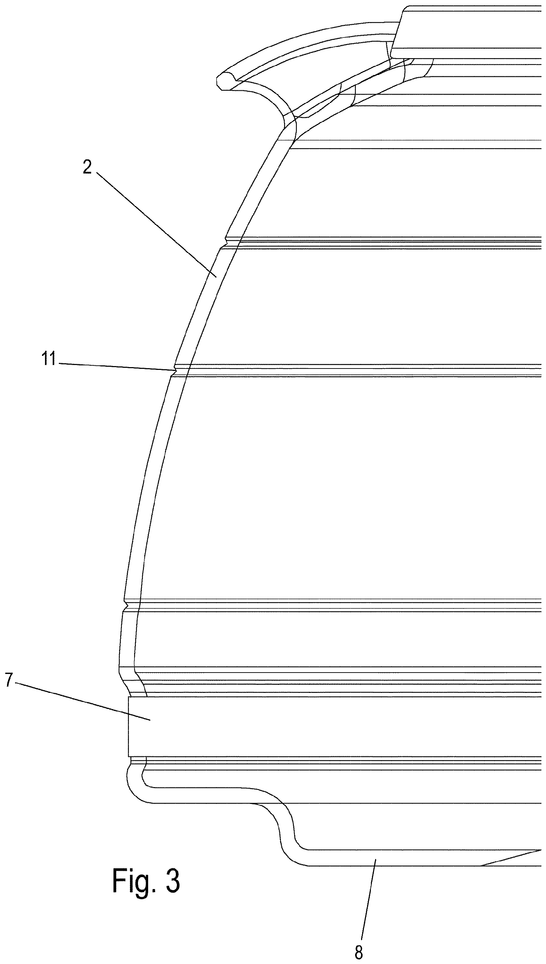

In Figur 3 ist eine modifizierte Form einer Glaskanne gezeigt, die wie in Figur 1 ausgebildet ist, bis auf den Unterschied, dass statt der nach außen hervorstehenden Rippen 10 an der Außenwand des Glaskörpers 2 Rillen 11 vorgesehen sind, die als Dosiermarkierungen dienen. Die Rillen 11 können eine Breite und/oder Tiefe zwischen 0,2 mm bis 3 mm, insbesondere 0,5 mm bis 2 mm, besitzen, um für den Benutzer eine sichtbare Markierung beim Einfüllen einer Flüssigkeit in die Glaskanne 1 zu bilden.

Die Dosiermarkierungen in Form der Rippen 10 oder Rillen 11 können je nach Größe der Glaskanne 1 zur Anzeige einer Füllmenge dienen, die einer oder zwei Tassen entspricht, so dass über die Höhe des Glaskörpers 2 verteilt drei bis zehn Dosiermarkierungen vorgesehen werden können.

In dem dargestellten Ausführungsbeispiel sind die Rippen 10 und Rillen 11 ringförmig umlaufend an dem Glaskörper 2 ausgebildet. Es ist auch möglich, die Dosiermarkierungen nur über einen Teil des Umfangs des Glaskörpers 2 verlaufen zu lassen, beispielsweise über die Hälfte des Umfangs, oder einen Bereich, der nur 20 % des Umfangs oder mehr entspricht. Zudem kann die Geometrie der Dosiermarkierungen abgewandelt werden.

Zusätzlich ist es optional auch möglich, neben den Dosiermarkierungen auch Symbole oder Markierungen vorzusehen, die dem Benutzer die Tassenanzahl anzeigen, die der entsprechenden Dosiermarkierung entspricht.

### Bezugszeichenliste

- 1: Glaskanne
- 2: Glaskörper
- 3: Öffnung
- 4: Deckel
- 5: Ausgussbereich
- 6: Griff
- 7: Spannband
- 8: Boden
- 9: Vertiefung
- 10: Rippe
- 11: Rille

## Patentansprüche

1. Glaskanne (1), insbesondere für eine Kaffeemaschine, mit einem Glaskörper (2), einem an einer Öffnung (3) des Glaskörpers (2) vorgesehenen Deckel (4) und einem von dem Glaskörper (2) hervorstehenden Griff (6), wobei an dem Glaskörper (2) Dosiermarkierungen (10, 11) zur Anzeige einer in dem Glaskörper (2) enthaltenen Flüssigkeitsmenge vorgesehen sind, **dadurch gekennzeichnet, dass** die Dosiermarkierungen (10, 11) durch integral mit dem Glaskörper (2) ausgebildete Profilierungen ausgebildet sind.

2. Glaskanne nach Anspruch 1, **dadurch gekennzeichnet, dass** die Dosiermarkierungen (10, 11) ringförmig an dem Glaskörper (2) in unterschiedlichen horizontalen Ebenen verlaufen.

3. Glaskanne nach Anspruch 1 oder 2, **dadurch gekennzeichnet, dass** mindestens drei Dosiermarkierungen (10, 11), vorzugsweise vier bis acht Dosiermarkierungen (10, 11), vorgesehen sind.

4. Glaskanne nach einem der vorhergehenden Ansprüche, **dadurch gekennzeichnet, dass** der Glaskörper (2) bis auf einen Ausgussbereich (5) an der Öffnung (3) rotationssymmetrisch ausgebildet ist.

5. Glaskanne nach einem der vorhergehenden Ansprüche, **dadurch gekennzeichnet, dass** der Griff (6) über ein Spannband (7) an dem Glaskörper (2) festgelegt ist, das in einer Vertiefung (9) an dem Glaskörper (2) umlaufend geführt ist.

6. Glaskanne nach einem der vorhergehenden Ansprüche, **dadurch gekennzeichnet, dass** die Profilierungen als nach außen hervorstehende Rippen (10) an dem Glaskörper (2) ausgebildet sind.

7. Glaskanne nach einem der Ansprüche 1 bis 5, **dadurch gekennzeichnet, dass** die Profilierungen als rillenförmige Vertiefungen (11) an der Außenseite des Glaskörpers (2) ausgebildet sind.

8. Glaskanne nach einem der vorhergehenden Ansprüche, **dadurch gekennzeichnet, dass** zusätzlich zu den Dosiermarkierungen (10, 11) Ziffern oder Symbole zur Anzeige der Füllmenge an der Glaskanne (1) vorgesehen sind.
